# EUROPÄISCHE PATENTANMELDUNG

(11) **EP 0 699 575 A1**
(43) Veröffentlichungstag der Anmeldung: **06.03.1996**
(21) Anmeldenummer: 95112243.1
(22) Anmeldetag: 03.08.1995
(51) Int. Cl.: B62D 1/19

(54) **Vorrichtung zum Teleskopieren einer Lenksäule in einem Kraftfahrzeug**

(30) Priorität: 05.08.1994 DE 4427834
(71) Anmelder: HS Technik und Design Technische Entwicklungen GmbH, D-82234 Wessling (DE)
(72) Erfinder: Specht, Martin, Dipl.-Ing. (FH), D-82340 Feldafing (DE); Krauss, Walter, Dipl.-Ing. (FH), D-80689 München (DE); Schröter, Rainer, Dipl.-Ing. (FH), D-80333 München (DE)
(74) Vertreter: Nöth, Heinz, Dipl.-Phys.

(57) **Zusammenfassung**

Eine Vorrichtung zum Teleskopieren einer Lenksäule in einem Kraftfahrzeug, welche wenigstens zwei in axialer Richtung zueinander verschiebbare Lenksäulenteile 1 und 2 aufweist, wobei das mit dem Lenkgetriebe verbundene vordere Lenksäulenteil 1 gegenüber dem im Fahrzeugaufbau in axialer Richtung im wesentlichen fest angeordneten Lenksäulenteil 2 zum Verkürzen der Lenksäule in axialer Richtung verschiebbar ist, wobei das verschiebbaare Lenksäulenteil 1 mit einem Hebel- und Gelenksystem 3, 4, 5 verbunden ist. An die Verkürzung der Lenksäule kann das Entfernen eines Fußhebelwerkes 8 aus dem Fahrgastraum gekoppelt sein.

## Beschreibung

Die Erfindung betrifft eine Vorrichtung zum Teleskopieren einer Lenksäule in einem Kraftfahrzeug, die wenigstens zwei in axialer Richtung zueinander verschiebbare Lenksäulenteile aufweist, welche im normalen Lenkbetrieb durch eine in einem Unfallgeschehen lösbare Verbindung fest miteinander verbunden sind, wobei das erste Lenksäulenteil mit einem Lenkgetriebeteil des Fahrzeugs und das zweite Lenksäulenteil mit einem Lenkrad verbunden sind.

Eine derartige Vorrichtung ist beispielsweise aus der DE 38 09 442 A1 bekannt. Die bekannte Vorrichtung ist derart ausgebildet, daß bei extremer Fahrzeuggeschwindigkeitsänderung, z.B. bei einem Unfall, das Lenkrad und das damit verbundene Lenksäulenteil durch Teleskopieren vom Fahrer weg bewegt wird.

Aufgabe der Erfindung ist es, eine Vorrichtung der eingangs genannten Art zu schaffen, die gewährleistet, daß unter Beibehaltung der für den normalen Fahrbetrieb vorhandenen Position des Lenkrades die Lenkfunktionen des Lenkrades durch z.B. in einem Unfallgeschenen nach hinten verschobene und auf die Lenksäule einwirkende Fahrzeugteile unbeeinflußt bleibt.

Diese Aufgabe wird erfindungsgemäß dadurch gelöst, daß das erste Lenksäulenteil gegenüber dem zweiten Lenksäulenteil, welches am Fahrzeugaufbau in axialer Richtung im wesentlichen fest angeordnet, teleskopierend ausgebildet ist und mit einem am Fahrzeugaufbau schwenkbar gelagerten Hebel- und Gelenksystem verbunden ist, durch das infolge einer im wesentlichen entgegengesetzt zur Vorwärtsfahrtrichtung einwirkenden Kraft nach Lösen der Verbindung zwischen den beiden Lenksäulenteilen das erste Lenksäulenteil gegenüber dem zweiten Lenksäulenteil zum Verkürzen der Lenksäule in axialer Richtung verschiebbar ist.

Hierdurch wird gewährleistet, daß die für den normalen Fahrbetrieb vorgesehene Position des Lenkrades im Fahrgastraum beibehalten wird. Auf die Lenksäule einwirkende nach hinten verschobene Fahrzeugteile verschieben nur das vordere Lenksäulenteil, welches mit dem Lenkgetriebe verbunden ist, gegenüber dem in axialer Richtung im wesentlichen fest positioniert verbleibenden zweiten Lenksäulenteil. Da bei dieser Längsverschiebung die Drehverbindung zwischen dem ersten Lenksäulenteil und dem zweiten Lenksäulenteil aufrecht erhalten wird und nur die axiale Verbindung für die teleskopierende Verschiebung gelöst ist, erreicht man die gewünschte Verkürzung der Lenksäule, ohne daß das Lenkrad in den Fahrgastraum nach hinten verschoben wird. Die Lenkfunktion der verkürzten Lenksäule bleibt aufrecht erhalten, und das Lenkrad hat die gleiche Position wie im normalen Fahrbetrieb.

Das Hebel- und Gelenksystem kann ein als Schubstange wirkendes Zwischenstück 14 in Stabform oder als Schubgabel aufweisen, mit welchem die Verformung eines Fahrzeugteils auf das erste Lenksäulenteil zur Verkürzung der Lenksäule übertragen wird. Dieses Zwischenstück kann gelenkig, insbesondere innerhalb eines bestimmten Schwenkbereichs mit begrenzter Gelenkigkeit mit dem durch überhöhte äußere Krafteinwirkung verformbaren bzw. bewegbaren Fahrzeugteil, beispielsweis der Spitzwand oder dem Bremskraftverstärker über ein erstes Gelenk und mit dem ersten Lenksäulenteil über ein zweites Gelenk verbunden sein. Damit eine ausreichende Schubwirkung auf das erste Lenksäulenteil erreicht wird, kann die Gelenkigkeit begrenzt sein, wobei insbesondere das Gelenk, welches zwischen dem Zwischenstück und dem ersten Lenksäulenteil vorgesehen ist, nur einen begrenzten Schwenkbereich zuläßt. Dieser begrenzte Schwenkbereich kann jedoch auch bei dem Gelenk vorgesehen sein, welches das Zwischenstück mit dem verformbaren bzw. bewegbaren Fahrzeugteil verbindet.

Das Hebel- und Gelenksystem kann in einer unterhalb der Lenksäule quer zur Längsmittelachse des Fahrzeugs verlaufenden Schwenkachse, die durch zwei Anlenkstellen am Fahrzeugaufbau gebildet wird, abgestützt sein. Hierbei kann ein Hebel vorgesehen sein, der als Bügel ausgebildet ist, welcher im Bereich des Schwellers und des Tunnels in den beiden Anlenkstellen am Fahrzeugaufbau abgestützt ist. Die Form des Bügels kann an die jeweiligen Gegebenheiten, die im Fahrzeugaufbau vorliegen, angepaßt werden.

Das obere Ende des Hebels weist dabei ein erstes Gelenk auf, das über ein Zwischenstück mit einem zweiten Gelenk am vorderen Ende des verschiebbaren ersten Lenksäulenteils verbunden ist. Hierdurch wird eine exakte Parallelführung bzw. axiale Führung des teleskopierenden ersten Lenksäulenteils beim Verkürzen der Lenksäule ermöglicht.

Anhand von Ausführungsbeispielen wird die Erfindung noch näher erläutert. Es zeigt:
- Fig. 1:: ein erstes Ausführungsbeispiel;
- Fig. 2:: ein zweites Ausführungsbeispiel;
- Fig. 3:: das zweite Ausführungsbeispiel bei verkürzter Lenksäule;
- Fig. 4:: ein drittes Ausführungsbeispiel in Seitenansicht;
- Fig. 5:: das dritte Ausführungsbeispiel von der Rückseite her gesehen;
- Fig. 6:: die Anordnung des Zwischenstückes beim dritten Ausführungsbeispiel; und
- Fig. 7:: in Seitenansicht ein viertes Ausführungsbeispiel.

Bei den Ausführungsbeispielen besitzt die Lenksäule des Kraftfahrzeugs ein erstes Lenksäulenteil 1 und ein zweites Lenksäulenteil 2. Das erste Lenksäulenteil 1 ist an seinem vorderen Ende mit einem nicht näher dargestellten Lenkgetriebeteil des Fahrzeugs, z.B. über ein Kreuzgelenk 15, verbunden. Das zweite Lenksäulenteil 2 ist mit einem Lenkrad 9 verbunden. Das erste Lenksäulenteil 1 ist im Fahrzeug so positioniert, daß es in axialer Richtung, d.h. in Richtung der Lenksäulenachse 6, im wesentlichen fest angeordnet ist. Das erste Lenksäulenteil 1 ist im zweiten Lenksäulenteil 2 teleskopierend geführt. Hierzu besitzt das zweite Lenksäulenteil ein Rohrstück, in welchem das erste Lenksäulenteil in axialer Richtung führbar ist.

Für den normalen Fahrbetrieb sind die beiden Lenksäulenteile 1 und 2 drehfest miteinander verbunden. Ferner besitzen sie eine feste Verbindung in axialer Richtung, welche bei überhöht auf das erste Lenksäulenteil einwirkenden Kräften gelöst wird. Diese Verbindung in axialer Richtung kann beispielsweise in Form eines zwischen den beiden Lenksäulenteilen wirkenden Scherstiftes vorliegen. Aufrecht erhalten bleibt jedoch die drehfeste Verbindung zwischen den beiden Lenksäulenteilen auch, wenn das erste Lenksäulenteil 1 in axialer Richtung gegenüber dem zweiten Lenksäulenteil 2 verschoben wird. Eine entsprechende Verbindung zwischen zwei Lenksäulenteilen ist beispielsweise aus der DE 38 09 442 A1 bekannt.

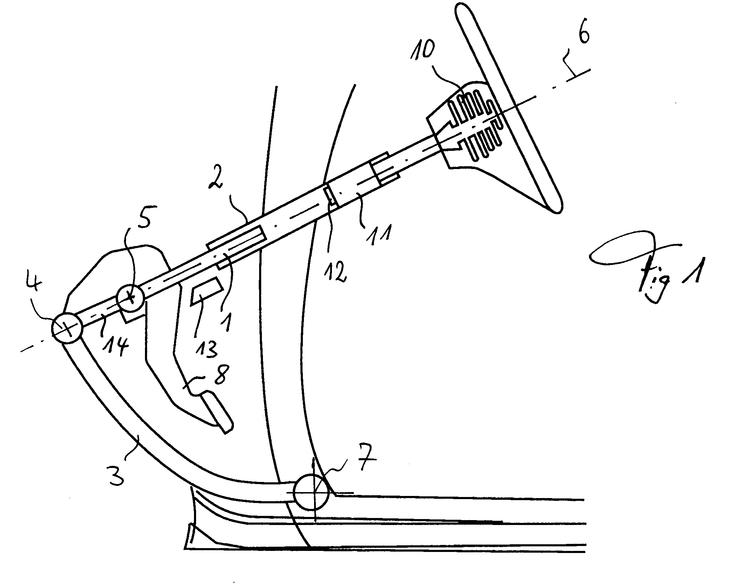

Mit dem vorderen Ende des ersten Lenksäulenteils 1 ist ein Hebel- und Gelenksystem verbunden. Bei dem in der Figur 1 dargestellten Ausführungsbeispiel besitzt das Hebel- und Gelenksystem einen einarmigen Hebel 3, der in einer Schwenkachse 7 unterhalb der Lenksäule am Fahrzeugaufbau angelenkt ist. Am anderen Ende besitzt der Hebel 3 ein erstes Gelenk 4. Das erste Gelenk 4 ist über ein Zwischenstück 14 mit einem zweiten Gelenk 5 verbunden, das am vorderen Ende des ersten Lenksäulenteils 1 vorgesehen ist. Der Hebel 3 kann in Form eines Bügels, welcher an die im Fahrzeugaufbau vorhandenen zwei Räume angepaßt ist, ausgebildet sein. Der bügelfreie Hebel 3 ist an zwei Stellen am Fahrzeugaufbau angelenkt, wobei die Anlenkstellen die Achse 7 bilden. Beispielsweise kann die eine Anlenkstelle in dem Bereich vorgesehen sein, in welchem die A-Säule des Fahrzeugs mit dem Schweller verbunden ist, und die andere Anlenkstelle im Bereich des Tunnels. Der Abstand der Schwenkachse 7 von der Lenksäulenachse 6 ist größer als der Hebelarm (Abstand des Gelenkes 4 von der Schwenkachse 7) des Hebels 3. Beim Schwenken des Hebels 3 um die Schwenkachse 7 führt aufgrund der achsparallelen Verschiebungsführung des ersten Lenksäulenteils 1 im zweiten Lenksäulenteil 2 und der somit ebenfalls achsparallelen Verschiebung des zweiten Gelenks 5 das erste Gelenk 4 um das zweite Gelenk 5 eine Schwenkbewegung auf einen Kreisbogen aus, wenn der Hebel 3 in der Figur sich im Uhrzeigersinn, d.h. entgegen der Vorwärtsfahrtrichtung verschwenkt.

Die achsparallele Verschiebung und gegebenenfalls die Schwenkbewegung des Gelenkes 4 um das Gelenk 5, welches beim Verkürzen der Lenksäule schräg nach oben rechts in der Figur bewegt wird, werden ausgenützt, um ein im Bereich des freien Hebelarmendes des Hebels 3 vorgesehenes Fußhebelwerk 8 aus dem Fahrgastraum zurückzuziehen. Das Fußhebelwerk 8 (Brems- und Kupplungspedale sowie Gashebel) können im Bereich der Gelenkpunkte 4 und 5 mit dem Hebel- und Gelenksystem verbunden sein, so daß bei einer Krafteinwirkung von vorne (links in der Figur) durch rückwärts (nach rechts der Figur) bewegte Fahrzeugteile, z.B. die Spritzwand oder Motorteile die Bewegung der Gelenke 4 und 5 auf das Fußhebelwerk 8 bei der Verkürzung der Lenksäule mit übertragen wird.

Dabei wird der Hebel 3 um die Schwenkachse 7 verschwenkt bei gleichzeitigem Verschwenken des Gelenkes 4 um das Gelenk 5 in einem radialen Abstand, der durch das Zwischenstück 14 bestimmt ist. Das Fußhebelwerk 8, welches zusätzlich über eine durch die Bewegung lösbare Verbindung mit dem Fahrzeugaufbau, beispielsweise mit der Spritzwand verbunden sein kann, wird dabei mitbewegt. Zusätzlich kann eine Abstreifeinrichtung in Form einer Abstreifkante 13 vorgesehen sein, durch welche das Fußhebelwerk 8 beim Verschieben des Gelenkes 5 in axialer Richtung bei der Lenksäulenverkürzung endgültig aus dem Fahrgastraum um das Gelenk 5 herausgeschwenkt wird. Wie aus der Figur zu ersehen ist, verbleibt zunächst bei einer nur schwachen Verkürzung der Lenksäule, d.h. bei einer nur relativ kurzen Verschiebung des Lenksäulenteils 1 im Lenksäulenteil 2 das Fußhebelwerk noch im Fahrgastraum, so daß es vom Fahrer betätigt werden kann. Wenn die Lenksäule jedoch stark verkürzt wird, d.h. das Lenksäulenteil 1 um eine relataiv große Strecke im Lenksäulenteil 2 verschoben wird, erfolgt die Entfernung des Fußhebelwerkes 8 aus dem Fahrgastraum, wobei die Abstreifeinrichtung 13 beim Herausschwenken des Fußhebelwerkes 8 aus dem Fahrgastraum zur Wirkung gebracht werden kann.

Im Lenkrad 9 kann ein Airbag 10 angeordnet sein, so daß in einem Unfallgeschehen ein geeigneter Aufprallschutz am Lenkrad 9, welches seine Normalposition beibehält, für den Fahrzeuginsassen vorgesehen ist.

Ferner kann im zweiten Lenksäulenteil 2, welcher in axialer Richtung fest im Fahrzeug verbleibt, eine Lenkraddämpfungseinrichtung 11 vorgesehen sein, beispielsweise in Form eines Luftkissens. Dieses kann mit einem Überströmventil 12 zusammenwirken. Hierdurch wird im Zusammenhang mit dem Airbag 10 ein weiterer Aufprallschutz am in seiner Normalposition im Fahrgastraum gehaltenen Lenkrad in Zusammenwirkung mit dem zweiten Lenksäulenteil 2 vorgesehen.

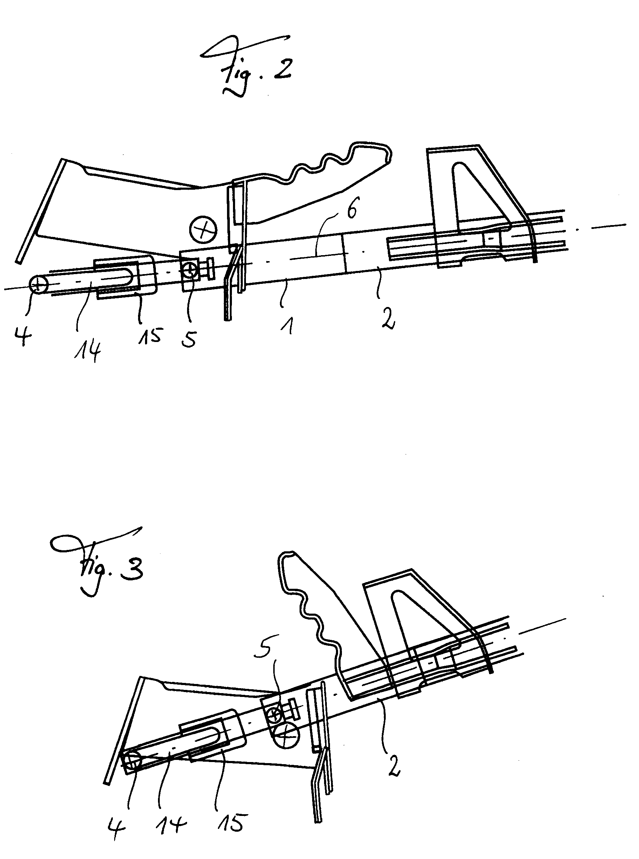

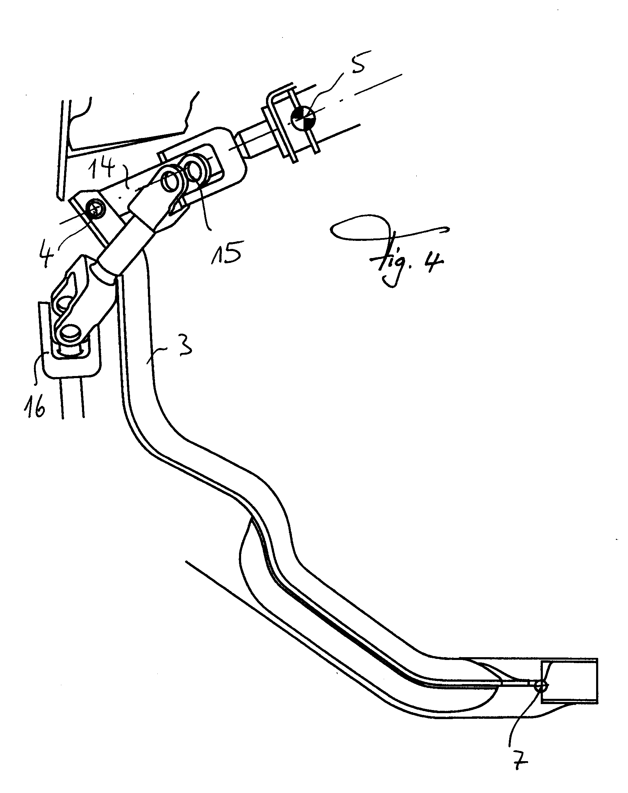

Bei dem in den Figuren 2 und 3 dargestellten Ausführungsbeispiel fehlt im Hebel- und Gelenksystem der Hebel 3. Das Zwischenstück 14, welches als Schubstange oder Schubgabel ausgebildet sein kann, ist über das erste Gelenk 4 mit dem beweglichen bzw. verformbaren Fahrzeugteil verbunden. Über das zweite Gelenk 5 ist das Zwischenstück 14 mit dem ersten Lenksäulenteil 1 verbunden. Durch entsprechende Anordnung und/oder Ausbildung der Gelenke 4 und/oder 5 wird eine begrenzte Gelenkigkeit zwischen dem ersten Lenksäulenteil 1 und dem verformbaren bzw. beweglichen Kraftfahrzeugteil vorgesehen, so daß eine ausreichende Schubwirkung über das Zwischenstück 14 auf das Lenksäulenteil 1 übertragen werden kann. Beispielsweise können die Gelenke 4 und/oder 5 eine nur begrenzte Schwenkbewegung des Zwischenstückes 14 gegenüber den damit verbundenen Teilen zulassen. Bevorzugt besitzt das Gelenk 5 eine begrenzte Schwenkbarkeit.

In der Figur 2 ist die Anordnung bei normalem Lenkbetrieb dargestellt. In der Figur 3 ist die Anordnung bei verkürzter Lenksäule dargestellt. Hierbei wurde aufgrund äußerer überhöhter Krafteinwirkung, beispielsweise bei einem Unfallgeschehen, durch das dabei verformte bzw. bewegte Fahrzeugteil das Gelenk 4 entgegen der Fahrzeugvorwärtsrichtung (in den Figuren nach rechts) bewegt. Diese Bewegung wurde aufgrund der Schubwirkung des Zwischengliedes 14 auf das erste Lenksäulenteil 1 übertragen, so daß dieses in das zweite Lenksäulenteil 2 geschoben wurde.

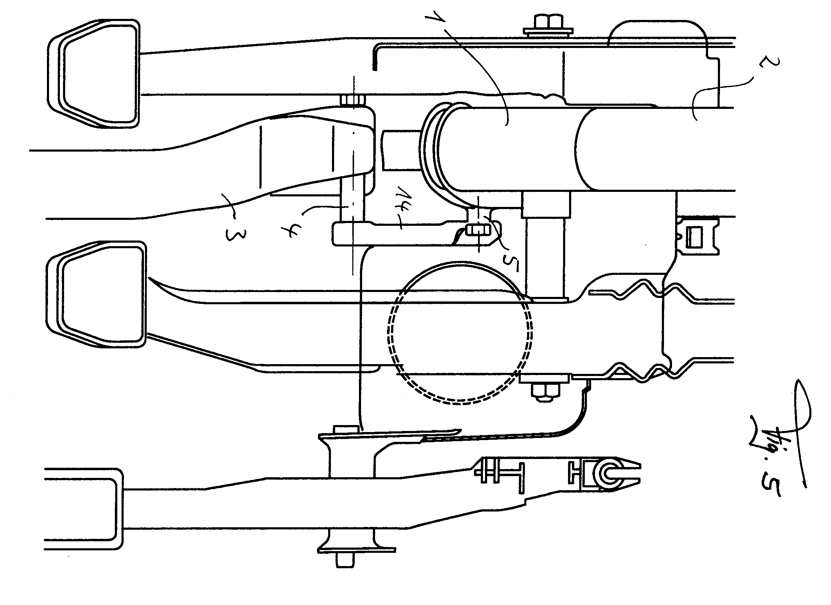

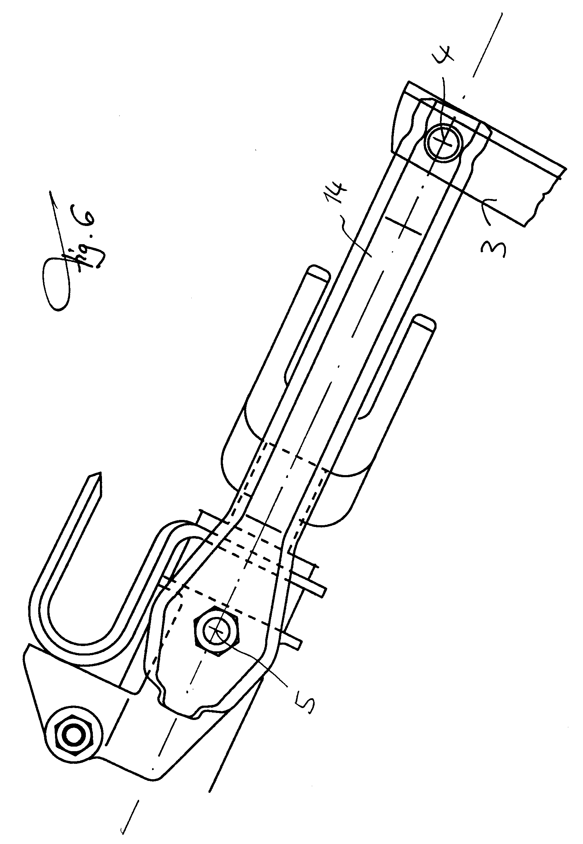

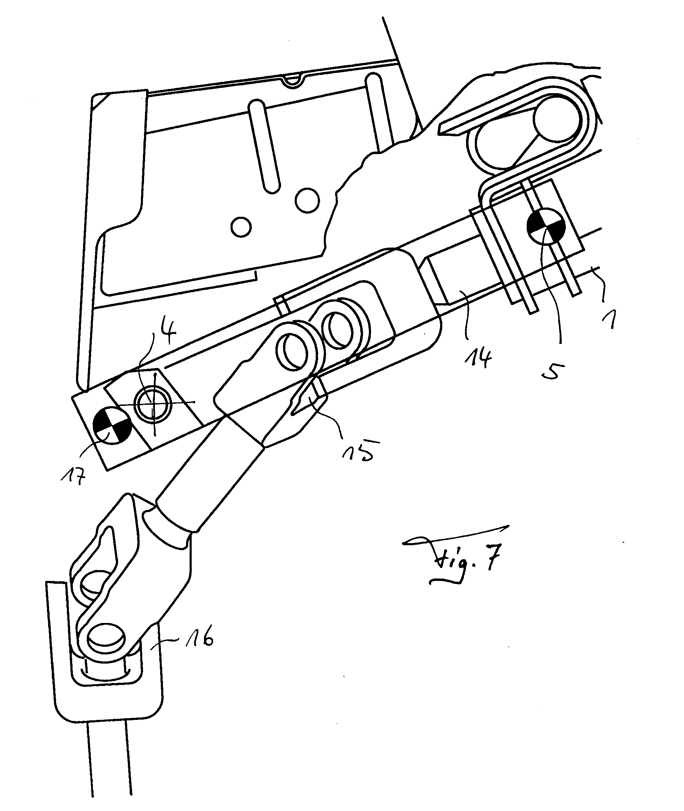

Bei dem in den Figuren 4 bis 6 dargestellten Ausführungsbeispiel ist das Zwischenstück 14 über das Gelenk 4 mit dem als Schwenkbügel ausgebildeten Hebel 3 verbunden. Der Hebel 3 ist, wie die Figur 4 zeigt, am Fahrzeugaufbau in einer Schwenkachse 7 wie der Hebel 3 des ersten Ausführungsbeispiels schwenkbar gelagert. Wenn auf den Hebel 3 durch bewegte oder verformte Fahrzeugteile eine Kraft ausgeübt wird, überträgt sich diese über das Zwischenstück 14, welche s w ie eine Koppel wirkt, auf das Lenksäulenteil 1, so daß dieses in das andere Lenksäulenteil 2 zur Lenksäulenverkürzung geschoben wird. Aus der Figur 5 ist im einzelnen die Anordnung des Hebels 3 und des Zwischenstückes 14 bezüglich der Pedale des Fahrzeugs zu ersehen. Wie insbesondere aus den Figuren 5 und 6 zu ersehen ist, erstreckt sich das als Koppel ausgebildete Zwischenstück 14 seitlich der Lenksäule, welche über Kreuzgelenke 15, 16 mit dem Lenkgetriebe verbunden ist.

Bei dem in der Figur 7 dargestellten Ausführungsbeispiel fehlt ebenfalls der Hebel 3. Wie beim Ausführungsbeispiel der Figuren 2 und 3 wirkt das Zwischenstück 14 als Schubstange über die Verformungen bzw. Bewegungen von Fahrzeugteilen, die zur Verkürzung der Lenksäule auf das erste Lenksäulenteil 1 übertragen werden. Im Gelenk 5 kann eine auf einen bstimmten Winkelbereich begrenzte Schwenkbarkeit zwischen dem Zwischenstück 14 und dem Lenksäulenteil 1 vorgesehen sein. Ferner kann am vorderen Ende in einem Gelenk 17 das nicht näher dargestellte Fußhebelwerk des Fahrzeugs schwenkbar gelagert sein. Bei der Ausführungsform der Figur 7 wird daher nicht nur die Lenksäule verkürzt, sondern wie auch beim Ausführungsbeispiel der Figur 1 das Fußhebelwerk aus seiner normalen Betriebsposition bewegt.

## Patentansprüche

1. Vorrichtung zum Teleskopieren einer Lenksäule in einem Kraftfahrzeug, die wenigstens zwei in axialer Richtung zueinander verschiebbare Lenksäulenteile aufweist, welche im normalen Lenkbetrieb durch eine in einem Unfallgeschehen lösbare Verbindung fest miteinander verbunden sind, wobei das erste Lenksäulenteil mit einem Lenkgetriebeteil des Fahrzeugs und das zweite Lenksäulenteil mit einem Lenkrad verbunden sind,
dadurch **gekennzeichnet**
daß das erste Lenksäulenteil (1) gegenüber dem zweiten Lenksäulenteil, das am Fahrzeugaufbau in axialer Richtung im wesentlichen fest angeordnet ist, teleskopierend ausgebildet ist und mit einem am Fahrzeugaufbau schwenkbar gelagerten Hebel- und Gelenksystem (3, 4, 5, 14) verbunden ist, durch das infolge einer im wesentlichen entgegengesetzt zur Vorwärtsfahrtrichtung einwirkenden Kraft nach Lösen der Verbindung das erste Lenksäulenteil (1) gegenüber dem zweiten Lenksäulenteil (2) zum Verkürzen der Lenksäule in axialer Richtung verschiebbar ist.

2. Vorrichtung nach Anspruch 1, dadurch gekennzeichnet, daß das erste Lenksäulenteil (1) über ein Zwischenstück (14) mit in einem begrenzten Schwenkbereich gelenkig mit einem durch überhöhte äußere Krafteinwirkung verformbaren und/oder beweglichen Fahrzeugteil verbunden ist.

3. Vorrichtung nach Anspruch 1 oder 2, dadurch gekennzeichnet, daß das Zwischenstück (14) gegenüber dem Lenksäulenteil (1) innerhalb eines begrenzten Winkelbereiches schwenkbar ist.

4. Vorrichtung nach einem der Ansprüche 1 bis 3, dadurch gekennzeichnet, daß das Zwischenstück (14) auf das erste Lenksäulenteil (1) eine Schubwirkung ausübt bei Verformung bzw. Bewegung bzw. Bewegung des Fahrzeugteils.

5. Vorrichtung nach einem der Ansprüche 1 bis 4, dadurch gekennzeichnet, daß die Verformung bzw. Bewegung des Fahrzeugteils über das Zwischenstück (14) auf das erste Lenksäulenteil (1) und/oder das Fußhebelwerk (8) übertragbar ist.

6. Vorrichtung nach einem der Ansprüche 1 bis 5, dadurch gekennzeichnet, daß das Zwischenstück (14) mit dem verform- bzw. bewegbaren Fahrzeugteil über ein erstes Gelenk (4) und mit dem ersten Lenksäulenteil (1) über ein zweites Gelenk (5) verbunden ist.

7. Vorrichtung nach einem der Ansprüche 1 bis 6, dadurch gekennzeichnet, daß das Hebel- und Gelenksystem (3, 4, 5, 14) in einer Schwenkachse (7), die unterhalb der Lenksäule (1, 2) liegt, am Fahrzeugaufbau abgestützt ist.

8. Vorrichtung nach Anspruch 7, dadurch gekennzeichnet, daß das Hebel- und Gelenksystem (3, 4, 5, 14) am ersten Lenksäulenteil (1) mit einem Hebelarm (einseitiger Hebelarm 3) angreift, der länger ist, als der Abstand der Schwenkachse (7) von der Lenksäulenachse (6).

9. Vorrichtung nach Anspruch 7 oder 8, dadurch gekennzeichnet, daß der wenigstens eine Hebel (3) als Bügel ausgebildet ist, der an zwei Stellen, welche die Schwenkachse (7) bilden, am Fahrzeug abgestützt ist.

10. Vorrichtung nach einem der Ansprüche 7 bis 9, dadurch gekennzeichnet, daß die Schwenkachse (7) sich senkrecht zur Fahrzeuglängsmittelachse erstreckt.

11. Vorrichtung nach einem der Ansprüche 1 bis 10, dadurch gekennzeichnet, daß das erste Gelenk (4) beim Schwenken um die Schwenkachse (7) schwenkbar ist und um das dabei auf einem Kreisbogen axial bewegte zweite Gelenk (5) auf einem Kreisbogen führbar ist.

12. Vorrichtung nach einem der Ansprüche 1 bis 11, dadurch gekennzeichnet, daß im Bereich des freien Hebelarmendes des Hebels (3) ein Fußhebelwerk (8) des Fahrzeugs mit der Schwenkbewegung des Hebels (3) mitbewegbar ist.
